# FASCICULE DE BREVET EUROPEEN

(11) **EP 3 066 707 B1**
(45) Date de publication et mention de la délivrance du brevet: **12.07.2017**
(21) Numéro de dépôt: 14809467.5
(22) Date de dépôt: 06.11.2014
(51) Int. Cl.: H01M 2/34, H01H 39/00, H01H 37/00, H01M 4/58, H01M 10/0525, H01M 4/131, H01M 10/42, H01M 4/136, H01H 85/02

(54) **BATTERIE D'ACCUMULATEURS ASSURANT UNE CONTINUITE DE SERVICE LORS D'UN DYSFONCTIONNEMENT**
SPEICHERBATTERIE MIT UNUNTERBROCHENER DIENSTLEISTUNG IM STÖRUNGSFALL
STORAGE BATTERY PROVIDING CONTINUITY OF SERVICE IN THE EVENT OF A MALFUNCTION

(30) Priorité: 06.11.2013 FR 1360881
(43) Date de publication de la demande: 14.09.2016
(73) Titulaire: Commissariat à l'Energie Atomique et aux Energies Alternatives, 75015 Paris (FR)
(72) Inventeur: CHATROUX, Daniel, F-38470 Teche (FR); CARCOUET, Sébastien, F-38450 Vif (FR); DUPONT, Jeremy, F-38300 Bourgoin-Jallieu (FR)
(74) Mandataire: GIE Innovation Competence Group
(86) Numéro de dépôt international: PCT/FR2014/052824
(87) Numéro de publication internationale: WO 2015/067896

(56) Documents cités:
- DE-A1-102008 010 971
- DE-A1-102009 047 439
- DE-A1-102011 115 550
- JP-A- H08 205 411
- US-A1- 2010 072 950

## Description

L'invention concerne les batteries d'accumulateurs électrochimiques. Celles-ci peuvent par exemple être utilisées dans le domaine des transports électriques et hybrides ou les systèmes embarqués.

Les véhicules hybrides combustion/électrique ou électriques incluent notamment des batteries de forte puissance. De telles batteries sont utilisées pour entraîner un moteur électrique à courant alternatif par l'intermédiaire d'un onduleur. Les niveaux de tension nécessaires pour de tels moteurs atteignent plusieurs centaines de Volts, typiquement de l'ordre de 400 Volts. De telles batteries comportent également une forte capacité afin de favoriser l'autonomie du véhicule en mode électrique.

Pour obtenir de fortes puissances et capacités, on place plusieurs groupes d'accumulateurs en série. Le nombre d'étages (nombre de groupes d'accumulateurs) et le nombre d'accumulateurs en parallèle (nombre de branches) dans chaque étage varient en fonction de la tension, du courant et de la capacité souhaités pour la batterie. L'association de plusieurs accumulateurs est appelée une batterie d'accumulateurs. Les accumulateurs électrochimiques utilisés pour de tels véhicules sont généralement du type lithium ion pour leur capacité à stocker une énergie importante avec un poids et un volume contenus. Les technologies de batterie de type Lithium ion phosphate de fer LiFePO4 font l'objet d'importants développements du fait d'un niveau de sécurité intrinsèque élevé, au détriment d'une densité de stockage d'énergie un peu en retrait. Un accumulateur électrochimique a habituellement une tension nominale de l'ordre de grandeur suivant :
3.3 V pour une technologie lithium-ion phosphate de Fer, LiFePO4,
4.2 V pour une technologie de type lithium-ion à base d'oxyde de cobalt. L'invention peut également s'appliquer à des super-condensateurs.

Dans une batterie d'accumulateurs lithium-ion connue de l'état de la technique, une batterie est composée de plusieurs étages connectés en série. Chaque étage comprend plusieurs accumulateurs similaires, connectés en parallèle dans des branches respectives. Une ou plusieurs charges sont destinées à être connectées aux bornes de la batterie. La tension totale entre les bornes de la batterie est la somme des tensions des étages. Le courant généré sur la borne positive de la batterie est la somme des courants des différentes branches. Un circuit d'équilibrage de charge est connecté aux bornes de chaque étage de la batterie.

Dans toute la durée de vie de la batterie, certains défauts peuvent apparaître sur certains accumulateurs composant la batterie. Un défaut sur un accumulateur se traduit généralement soit par la mise en court-circuit de l'accumulateur, soit par une mise en circuit ouvert, soit par un courant de fuite important dans l'accumulateur. Il est important de connaître l'impact de la défaillance d'un accumulateur sur la batterie. Une mise en circuit ouvert ou en court-circuit peut provoquer une défaillance globale de toute la batterie.

Dans le cas de l'apparition d'un courant de fuite important dans un accumulateur d'un étage, la batterie se comporte comme une résistance qui provoque une décharge des accumulateurs de l'étage considéré jusqu'à zéro. Les risques de départ de feu sont faibles car l'énergie est dissipée relativement lentement. En technologie lithium ion, la décharge des accumulateurs de l'étage jusqu'à une tension nulle les détériore ce qui implique leur remplacement en plus de l'accumulateur initialement défaillant. Lorsqu'un accumulateur forme un court-circuit, les autres accumulateurs de l'étage vont initialement se décharger dans cet accumulateur, du fait de la forte section des connexions électriques entre eux. Le fusible placé en série avec l'accumulateur en court-circuit va interrompre la décharge parasite des autres accumulateurs.

Afin de protéger la batterie des conséquences d'un court-circuit dans un accumulateur, chaque accumulateur présente un fusible qui lui est connecté en série. Lorsqu'un accumulateur forme un court-circuit, le courant le traversant augmente sensiblement et fait fondre son fusible série afin de protéger le reste de la batterie. En l'absence de fusible, la dissipation d'énergie dans l'accumulateur en court-circuit induirait son échauffement ainsi que celui des autres accumulateurs se déchargeant. Une telle dissipation pourrait être la cause d'un départ de feu. Les technologies lithium ion sont particulièrement à risque lorsqu'un étage comprend un grand nombre d'accumulateurs en parallèle pour stocker une énergie importante. L'oxyde de cobalt est connu comme une chimie fortement réactive. Le phosphate de fer (LiFePO₄) est lui connu comme la chimie la plus sûre. L'utilisation de fusibles s'avère donc particulièrement appropriée pour ces technologies, en particulier pour le phosphate de fer qui tolère une certaine surtension.

Cependant, la présence des fusibles en série entre les étages d'accumulateurs induit des pertes non négligeables, particulièrement handicapantes pour des applications embarquées.

Le document WO2011/003924 décrit une structure de batterie permettant d'éliminer les pertes induites par un système de protection durant le fonctionnement normal de la batterie, et permettant en outre d'assurer une continuité de service de la batterie lorsqu'un élément de la batterie se retrouve en court-circuit ou en coupe-circuit. Le document DE102009047439 décrit une batterie ayant plusieurs étages connectés en série, chaque étage ayant plusieurs accumulateurs connectées en parallèle par l'intermédiaire de fusibles équipés d'un système pyrotechnique. Dans ce document, la batterie comprend au moins des première et deuxième branches présentant chacune au moins des premier et deuxième accumulateurs connectés en série. La batterie comprend en outre un disjoncteur ou un fusible par l'intermédiaire duquel les premiers accumulateurs sont connectés en parallèle et par l'intermédiaire duquel les deuxièmes accumulateurs sont connectés en parallèle. Le seuil de coupure du disjoncteur est dimensionné pour s'ouvrir lorsqu'un des accumulateurs est en court-circuit.

Lorsqu'une branche comprend un accumulateur en court-circuit, les disjoncteurs le connectant en parallèle à un ou plusieurs accumulateurs du même étage doivent se rompre. Une surtension est alors appliquée à plusieurs accumulateurs de cette branche. Pour des technologies de batterie telles que le LiFePO4, une telle surtension ne conduira pas à la destruction de ces accumulateurs. Ainsi, la tension de fin de charge d'un accumulateur LiFePO4 est de 3,6V, alors que sa tension de décomposition est de l'ordre de 4,5V. Une branche contenant un nombre suffisant d'accumulateurs en série, dont un en défaut, peut donc supporter cette surtension et garantir une continuité de service.

En pratique, une telle structure peut présenter des inconvénients. Lorsque la tension de chaque étage est relativement faible (par exemple de l'ordre de 3V), la fusion d'un fusible ou l'ouverture d'un disjoncteur est relativement délicate à contrôler. Les disjoncteurs connectant l'accumulateur en défaut peuvent alors s'avérer défaillants. D'autres disjoncteurs connectant d'autres accumulateurs de la branche en défaut posent également problème : le court-circuit de l'accumulateur en défaut induit encore une plus faible différence de potentiel (par exemple de l'ordre de 1 V) aux bornes de ces disjoncteurs. Leur ouverture est donc encore plus problématique.

Lorsque des fusibles sont utilisés, le fonctionnement peut être encore plus problématique. En effet, un fusible peut voir sa résistivité augmenter avec la température. Le fusible peut alors présenter une température qui se stabilise en dessous de la température de fusion, du fait d'un courant moindre débité par les sources de tension.

A faibles niveaux de tension, on peut donc se retrouver dans des configurations où les disjoncteurs ne s'ouvrent pas ou alors bien trop lentement. Plusieurs accumulateurs en série avec l'accumulateur défectueux peuvent alors être soumis à une surtension excessive, conduisant à leur destruction.

Un circuit de gestion d'équilibrage de charge est connecté aux bornes de chacun des étages de la batterie. Le circuit d'équilibrage de charge est configuré pour procéder à la charge des accumulateurs de ces étages, de façon à optimiser la capacité effective de la batterie. En pratique, la protection du circuit de gestion d'équilibrage de charge contre une défaillance d'un accumulateur est imparfaite.

L'invention vise à résoudre un ou plusieurs de ces inconvénients. L'invention porte ainsi sur une batterie d'accumulateurs, comprenant au moins :
- des premier et deuxième étages connectés électriquement en série, chaque étage incluant au moins des premier à troisième accumulateurs connectés électriquement en parallèle ;
- au moins des premier et deuxième sectionneurs par l'intermédiaire desquels les premier à troisième accumulateurs dudit premier étage sont connectés en parallèle et par l'intermédiaire desquels les premier à troisième accumulateurs dudit deuxième étage sont connectés en parallèle, chacun desdits sectionneurs incluant :
   - des première et deuxième électrodes ;
   - un fusible comportant une liaison conductrice connectée en série entre les première et deuxième électrodes et comportant une partie fusible ;
   - un explosif, un pont thermique étant formé entre le fusible et l'explosif de sorte que l'échauffement dudit fusible forme un détonateur initiant l'explosion de l'explosif, l'explosion de l'explosif provoquant l'ouverture de ladite liaison conductrice, l'explosif présentant une température d'initiation de l'explosion inférieure à la température de fusion de ladite partie fusible.

Selon une variante, lesdits accumulateurs sont des accumulateurs électrochimiques supportant sans destruction une différence de potentiel entre leurs bornes au moins supérieure de 10 % à leur tension nominale.

Selon encore une variante, lesdits accumulateurs sont de type lithium-ion LiFeP.

Selon une autre variante, la batterie comprend un dispositif de détection de l'ouverture d'une liaison conductrice, et chacun desdits sectionneurs comprend un élément conducteur connecté en série entre deux bornes du dispositif de détection, l'élément conducteur étant disposé de façon à être rompu par l'explosion de l'explosif de son sectionneur.

Selon encore une autre variante, la première électrode des premier et deuxième sectionneurs est connectée à un noeud de connexion commun, la deuxième électrode du premier sectionneur est connectée au premier accumulateur du premier étage, et la deuxième électrode du deuxième sectionneur est connectée au deuxième accumulateur du premier étage.

Selon une variante, lesdits premiers accumulateurs sont connectés en série dans une première branche, les deuxièmes accumulateurs sont connectés en série dans une deuxième branche, lesdits troisièmes accumulateurs sont connectés en série dans une troisième branche, la batterie comprenant en outre des premier à troisième circuits de protection connectés en série dans les première à troisième branches respectivement, chacun desdits circuits de protection comprenant un fusible traversé par le courant série de la branche, des ponts thermiques étant formés respectivement :
- entre l'explosif du premier sectionneur et le fusible du quatrième circuit de protection ;
- entre l'explosif du deuxième sectionneur et le fusible du cinquième circuit de protection ;

Selon encore une variante, la batterie comprend en outre :
- un troisième étage connecté électriquement en série avec les premier et deuxième étages, le troisième étage incluant au moins des premier à troisième accumulateurs connectés électriquement en parallèle ;
- au moins des cinquième et sixième sectionneurs par l'intermédiaire desquels les premier à troisième accumulateurs dudit deuxième étage sont connectés en parallèle et par l'intermédiaire desquels les premier à troisième accumulateurs dudit troisième étage sont connectés en parallèle, les cinquième et sixième sectionneurs incluant :
   - des première et deuxième électrodes ;
   - un fusible comportant une liaison conductrice connectée en série entre les première et deuxième électrodes et comportant une partie fusible ;
   - un explosif, un pont thermique étant formé entre le fusible et l'explosif de sorte que l'échauffement dudit fusible forme un détonateur initiant l'explosion de l'explosif, l'explosion de l'explosif provoquant l'ouverture de ladite liaison conductrice, l'explosif présentant une température d'initiation de l'explosion inférieure à la température de fusion de ladite partie fusible ;
dans laquelle l'explosif du premier sectionneur et l'explosif du cinquième sectionneur sont inclus dans un même premier élément explosif continu, et dans laquelle l'explosif du deuxième sectionneur et l'explosif du sixième sectionneur sont inclus dans un même deuxième élément explosif continu.

Selon une autre variante, lesdits premiers accumulateurs sont connectés en série dans une première branche, dans laquelle les deuxièmes accumulateurs sont connectés en série dans une deuxième branche, lesdits troisièmes accumulateurs sont connectés en série dans une troisième branche, des quatrième à sixième circuits de protection étant connectés en série dans les première à troisième branches respectivement, chacun desdits circuits de protection comprenant des premier et deuxième fusibles connectés en parallèle, des ponts thermiques étant formés respectivement :
- entre ledit premier élément explosif continu et le deuxième fusible du quatrième circuit de protection ;
- entre ledit premier élément explosif continu et le premier fusible du cinquième circuit de protection ;
- entre ledit deuxième élément explosif continu et le deuxième fusible du cinquième circuit de protection ;
- entre ledit deuxième élément explosif continu et le premier fusible du sixième circuit de protection.

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation schématique d'un exemple de batterie selon un mode de réalisation de l'invention ;
- la figure 2 est une représentation schématique d'un sectionneur selon une première variante ;
- la figure 3 est une représentation schématique d'un sectionneur selon une deuxième variante ;
- la figure 4 est un schéma électrique d'un premier exemple de connexion des sectionneurs à un circuit de contrôle ;
- la figure 5 est un schéma électrique d'un deuxième exemple de connexion des sectionneurs à un circuit de contrôle ;
- la figure 6 est une représentation schématique d'un premier exemple de module incluant plusieurs sectionneurs ;
- la figure 7 est une représentation schématique d'un autre exemple de batterie mettant en oeuvre le module de la figure 6 ;
- la figure 8 est une représentation schématique d'un deuxième exemple de module incluant plusieurs sectionneurs ;
- la figure 9 est une représentation schématique d'un autre exemple de batterie mettant en oeuvre le module de la figure 8 ;
- la figure 10 est une représentation schématique d'une déclinaison de la batterie de la figure 9 ;
- la figure 11 est une représentation schématique d'un troisième exemple de connexion de sectionneurs à un circuit de contrôle ;
- la figure 12 est une représentation schématique de la connexion de la figure 11 mettant en oeuvre le module de la figure 6 ;
- la figure 13 est une représentation schématique d'un autre exemple de batterie ;
- la figure 14 est une représentation schématique d'un circuit intégré incluant les sectionneurs de la figure 13.

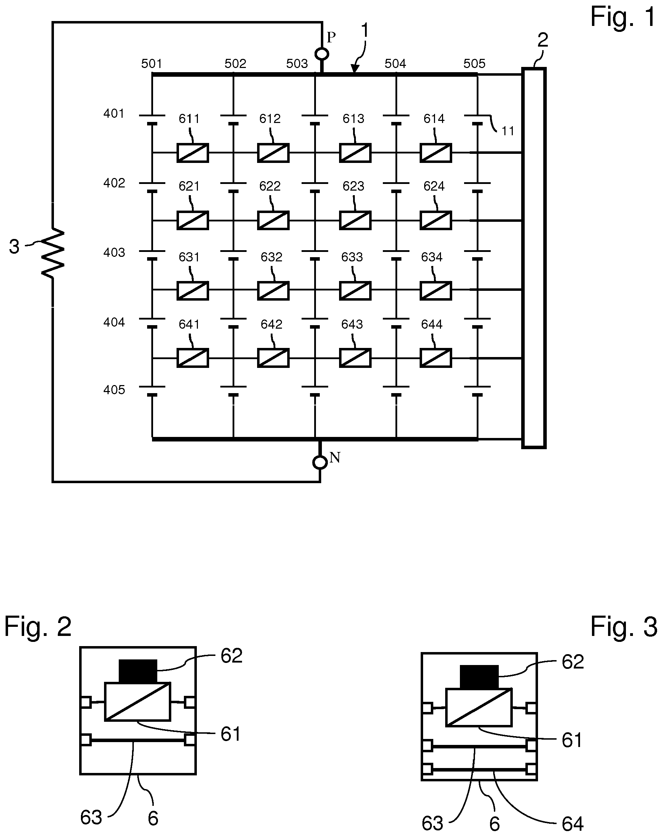

La figure 1 est une représentation schématique d'un exemple de batterie 1 selon un mode de réalisation de l'invention. La batterie 1 comprend cinq étages 401 à 405 connectés électriquement en série. Chaque étage comprend cinq accumulateurs ou cellules électrochimiques 11 connectés électriquement en parallèle. La batterie 1 comprend ainsi cinq branches 501 à 505 connectées électriquement en parallèle. La connexion en parallèle des accumulateurs 11 d'un étage est réalisée par l'intermédiaire de sectionneurs. Chaque sectionneur participe à la connexion en parallèle de deux accumulateurs 11 d'un étage, ainsi qu'à la connexion en parallèle de deux accumulateurs 11 d'un autre étage. Ainsi, les sectionneurs 611 à 614 participent à la connexion en parallèle des accumulateurs de l'étage 401 et à la connexion en parallèle des accumulateurs de l'étage 402. De façon similaire, les sectionneurs 621 à 624 participent à la connexion en parallèle des accumulateurs de l'étage 402, et à la connexion en parallèle des accumulateurs de l'étage 403. De façon similaire, les sectionneurs 631 à 634 participent à la connexion en parallèle des accumulateurs de l'étage 403 et à la connexion en parallèle des accumulateurs de l'étage 404. De façon similaire, les sectionneurs 641 à 644 participent à la connexion en parallèle des accumulateurs de l'étage 404 et à la connexion en parallèle des accumulateurs de l'étage 405.

Une charge électrique 3 est connectée aux bornes P et N de la batterie 1, de façon à être alimentée par cette batterie. Un circuit de gestion d'équilibrage de charge 2 est connecté électriquement à chacun des étages 401 à 405. Le circuit 2 est configuré pour procéder à la charge des accumulateurs 11 de ces étages. Le circuit 2 est également configuré pour assurer le suivi de l'état de charge des accumulateurs. Le circuit 2 est également configuré pour mettre en oeuvre un équilibrage de charge des accumulateurs de ces étages, en fonction du suivi de leur état de charge. Les fonctions de charge/suivi de l'état de charge/équilibrage de charge sont connues en soi et ne seront pas détaillées davantage. Au niveau des bornes P et N, la batterie 1 comprend avantageusement des collecteurs de puissance traversés par les courants en parallèle provenant des différentes branches 501 à 505.

Par ailleurs, le circuit 2 de l'exemple peut avantageusement être utilisé pour déterminer l'état de conduction des différents sectionneurs, afin de déterminer l'emplacement d'un éventuel dysfonctionnement à l'intérieur de la batterie 1.

Les sectionneurs permettent de brider le courant débité à travers un accumulateur 11 en court-circuit, afin d'éviter tout risque d'échauffement et de départ de feu, et ce même en présence d'un grand nombre d'accumulateurs connectés en parallèle dans chaque étage. La puissance de décharge des accumulateurs 11 d'un étage incluant un accumulateur en court-circuit est également limitée, ce qui peut permettre de poursuivre l'utilisation de la batterie 1.

Durant une phase de charge ou de décharge, le courant principal dans une branche traverse l'ensemble des accumulateurs connectés en série dans cette branche. Durant un tel fonctionnement, si tous les accumulateurs sont similaires et présentent un même état de charge ou de décharge, aucun courant transversal ne circule à travers les sectionneurs.

Chacun des sectionneurs comprend :
- des première et deuxième électrodes ;
- un fusible comportant une liaison conductrice connectée en série entre les première et deuxième électrodes et comportant une partie fusible ;
- un explosif. Un pont thermique est formé entre le fusible et l'explosif de sorte que l'échauffement de ce fusible forme un détonateur initiant l'explosion de l'explosif, l'explosion de l'explosif provoquant l'ouverture de la liaison conductrice du fusible. L'explosif présente une température d'initiation de l'explosion inférieure à la température de fusion de la partie fusible de l'explosif.

Ainsi, au cas où un dysfonctionnement d'un accumulateur 11 induit un courant à travers un sectionneur mais que ce courant est insuffisant pour faire fondre la partie fusible de son fusible, ce courant peut provoquer un échauffement du fusible suffisant pour provoquer l'explosion de l'explosif et donc l'ouverture de la liaison conductrice du fusible. Un sectionnement est donc obtenu même lorsque la tension aux bornes du sectionneur est réduite. Le fusible reste utile pour réaliser une coupure lors d'une augmentation brusque de l'intensité.

Une liaison conductrice en cuivre d'un fusible présente typiquement une température de fusion de l'ordre de 1000°C. Des explosif connus présentent des températures d'initiation de leur explosion de l'ordre de 300°C.

La figure 2 est une représentation schématique d'une première variante de sectionneur 6 pouvant être utilisée dans le cadre de l'invention. Le sectionneur 6 comporte des première et deuxième électrodes entre lesquelles une liaison conductrice d'un fusible 61 est connectée en série. Le sectionneur 6 comporte en outre un explosif 62, avec un pont thermique formé entre le fusible 61 et l'explosif 62. En l'occurrence, l'explosif 62 est plaqué contre le fusible 61.

Dans la variante de la figure 2, le sectionneur 6 comprend en outre un élément conducteur 63 dont la fonction sera détaillée dans un exemple de mise en oeuvre. L'élément conducteur 63 est disposé de façon à être rompu par l'explosion de l'explosif 62. Dans les variantes illustrées à la figure 3, le sectionneur 6 reprend les caractéristiques du sectionneur de la figure 2 et comprend en outre un élément conducteur 64 dont la fonction sera détaillée dans un autre exemple de mise en oeuvre. L'élément conducteur 64 est disposé de façon à être rompu par l'explosion de l'explosif 62.

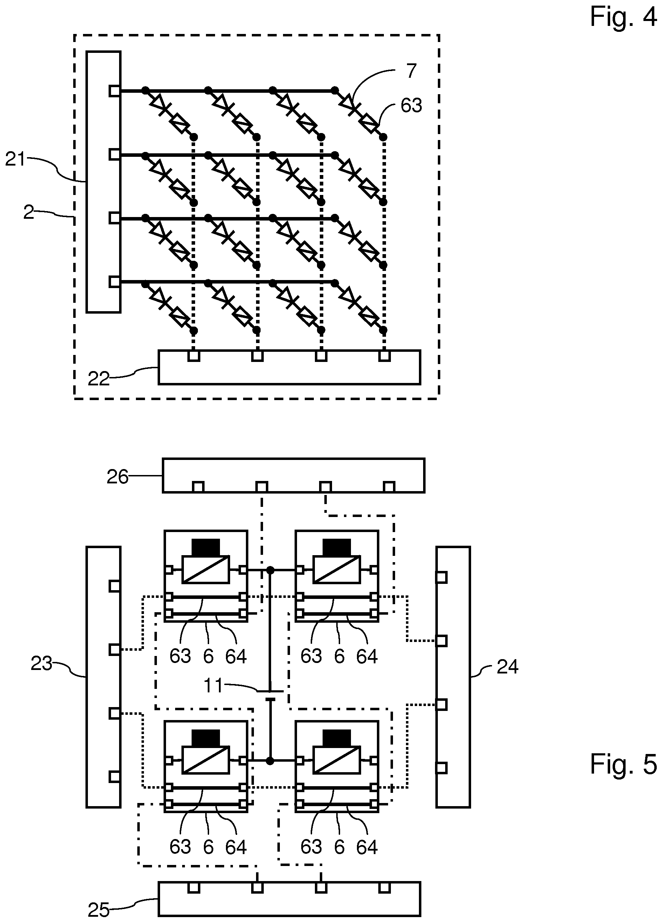

La figure 4 est un schéma électrique d'un premier exemple de connexion de sectionneurs 6 à un circuit de contrôle 2 de leur état d'ouverture, utilisant des sectionneurs 6 selon la figure 2. Le circuit de contrôle 2 comprend un émetteur 21 destiné à émettre un signal de contrôle. L'émetteur 21 est connecté à plusieurs lignes. L'émetteur 21 émet séquentiellement un signal sur chacune de ces lignes. Le circuit de contrôle 2 comprend en outre un récepteur 22. Le récepteur 22 est connecté à plusieurs colonnes. Entre chaque ligne et chaque colonne, un élément conducteur 63 d'un sectionneur 6 et une diode 7 sont connectés en série. Ainsi, chaque élément conducteur 63 est connecté entre une borne de l'émetteur 21 et une borne du récepteur 22 du circuit de contrôle 2. Si un sectionneur 6 est ouvert, le signal émis par l'émetteur 21 sur sa ligne n'est pas transmis sur sa colonne jusqu'au récepteur 22. Le circuit de contrôle 2 peut donc déterminer précisément quel sectionneur est ouvert.

Une batterie 1 selon l'invention comprend avantageusement des accumulateurs de type lithium-ion LiFePO₄ avec un nombre d'étages supérieur ou égal à 5. En effet, un accumulateur de ce type tolère une surtension par rapport à sa tension nominale (tension pouvant atteindre jusqu'à 4,2 V) et la surtension induite dans les accumulateurs d'une branche incluant un accumulateur en court-circuit n'induit ainsi pas leur destruction ou un risque de sécurité pour un nombre d'étages aussi important. De façon générale, la batterie 1 inclura de préférence des accumulateurs électrochimiques 11 supportant sans destruction une différence de potentiel entre leurs bornes au moins supérieure à 10% de leur tension nominale.

La figure 5 est un schéma électrique d'un deuxième exemple de connexion de sectionneurs 6 à un circuit de contrôle 2 de leur état d'ouverture, utilisant des sectionneurs 6 selon la figure 3. Le circuit de contrôle 2 comprend un émetteur 23 destiné à émettre un signal de contrôle. L'émetteur 23 est connecté à plusieurs lignes. L'émetteur 23 émet un signal sur chacune de ces lignes. Le circuit de contrôle 2 comprend en outre un récepteur 24 destiné à recevoir le signal de contrôle des différentes lignes. Chaque ligne correspond à une lignes de sectionneurs 6, dont les éléments conducteurs 63 sont connectés en série.

Le circuit de contrôle 2 comprend un émetteur 25 destiné à émettre un signal de contrôle. L'émetteur 25 est connecté à plusieurs colonnes. L'émetteur 25 émet un signal sur chacune de ces colonnes. Le circuit de contrôle 2 comprend en outre un récepteur 26 destiné à recevoir le signal de contrôle des différentes colonnes. Chaque colonne correspond à une colonne de sectionneurs 6, dont les éléments conducteurs 64 sont connectés en série.

Ainsi, en déterminant que les récepteurs 24 et 26 ne reçoivent pas de signaux de contrôle respectivement pour une ligne et une colonne, le circuit de contrôle 2 peut déterminer quel sectionneur 6 est ouvert.

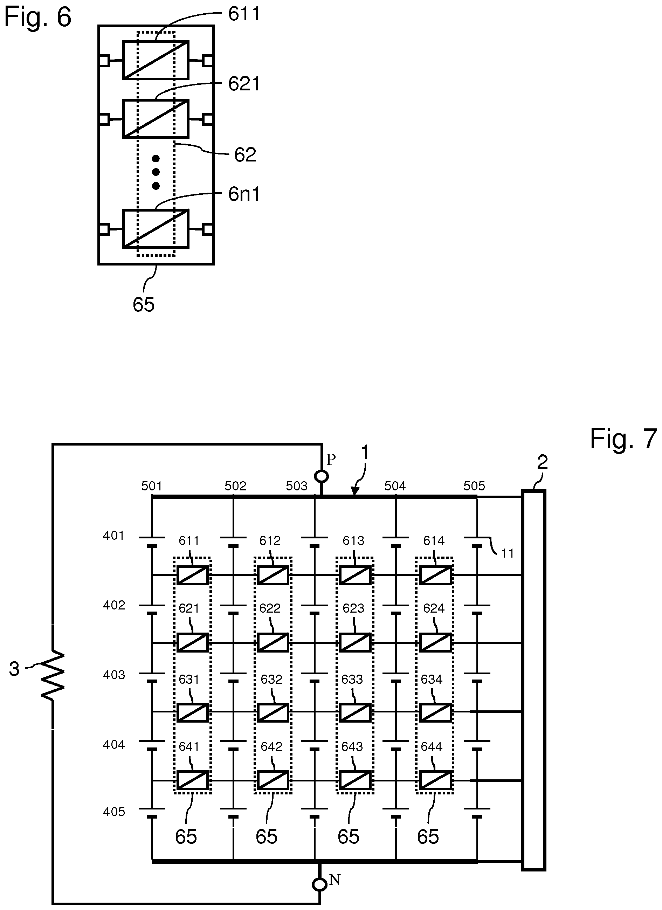

La figure 6 est une représentation schématique d'un premier exemple de module 65 incluant plusieurs sectionneurs. Un tel module 65 est destiné à provoquer l'ouverture d'un ensemble de sectionneurs en cas d'ouverture de l'un d'entre eux, afin de pouvoir isoler l'ensemble des accumulateurs 11 d'une branche par rapport aux autres branches. Le module 65 de la figure 6 comprend ainsi des sectionneurs 611 à 6n1, destinés à connecter en parallèle les différents étages de deux branches. Un élément explosif continu 62 est en contact thermique avec chacun des fusibles des sectionneurs 611 à 6n1. Ainsi, il suffit qu'un seul des fusibles des sectionneurs 611 à 6n1 soit ouvert par explosion, pour que l'ensemble des fusibles de ces sectionneurs soit ouvert par l'explosion de l'élément explosif continu 62.

La figure 7 est un schéma électrique d'un exemple de batterie 1 mettant en oeuvre des modules 65 selon la figure 6, en vue d'isoler une branche des autres. Les connexions en parallèle entre les branches 501 et 502 sont obtenues par l'intermédiaire des sectionneurs 611 à 641 d'un module 65 à élément explosif continu 62. Les connexions en parallèle entre les branches 502 et 503 sont obtenues par l'intermédiaire des sectionneurs 612 à 642 d'un module 65 à élément explosif continu 62. Les connexions en parallèle entre les branches 503 et 504 sont obtenues par l'intermédiaire des sectionneurs 613 à 643 d'un module 65 à élément explosif continu 62. Les connexions en parallèle entre les branches 504 et 505 sont obtenues par l'intermédiaire des sectionneurs 614 à 644 d'un module 65 à élément explosif continu 62.

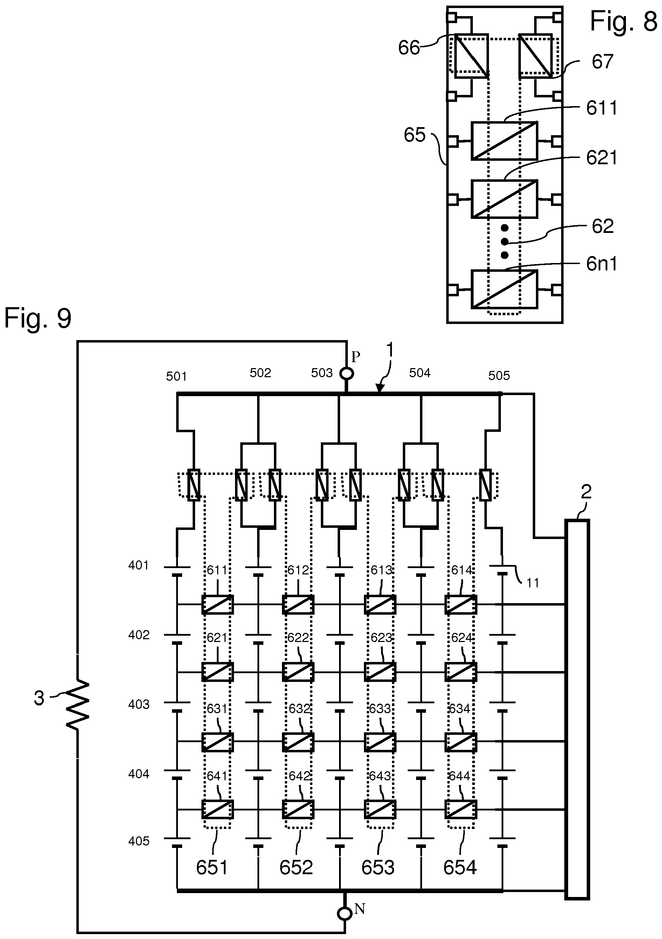

La figure 8 est une représentation schématique d'un deuxième exemple de module incluant plusieurs sectionneurs. Un tel module 65 est destiné à provoquer l'ouverture d'un ensemble de sectionneurs en cas d'ouverture de l'un d'entre eux, afin de pouvoir isoler l'ensemble des accumulateurs 11 d'une branche par rapport aux autres branches, et afin de pouvoir interrompre le courant série dans cette branche. Le module 65 de la figure 8 comprend d'une part des sectionneurs 611 à 6n1, destinés à connecter en parallèle les différents étages de deux branches. Un élément explosif continu 62 est en contact thermique avec chacun des fusibles des sectionneurs 611 à 6n1. Le module 65 comprend d'autre part des sectionneurs 66 et 67 destinés à se connecter en série dans une branche respective.

La figure 9 est un schéma électrique d'un exemple de batterie 1 mettant en oeuvre des modules 65 selon la figure 8. Les connexions en parallèle entre les branches 501 et 502 sont obtenues par l'intermédiaire des sectionneurs 611 à 641 d'un module 651 à élément explosif continu 62. Les connexions en parallèle entre les branches 502 et 503 sont obtenues par l'intermédiaire des sectionneurs 612 à 642 d'un module 652 à élément explosif continu 62. Les connexions en parallèle entre les branches 503 et 504 sont obtenues par l'intermédiaire des sectionneurs 613 à 643 d'un module 653 à élément explosif continu 62. Les connexions en parallèle entre les branches 504 et 505 sont obtenues par l'intermédiaire des sectionneurs 614 à 644 d'un module 654 à élément explosif continu 62.

Par ailleurs, un sectionneur 66 du module 651 est connecté en série dans la branche 501. Un sectionneur 67 du module 651 et un sectionneur 66 du module 652 sont connectés en parallèle, pour former un circuit de protection de la branche 502. Ce circuit de protection est connecté en série avec les accumulateurs 11 de la branche 502. Un sectionneur 67 du module 652 et un sectionneur 66 du module 653 sont connectés en parallèle, pour former un circuit de protection de la branche 503. Ce circuit de protection est connecté en série avec les accumulateurs 11 de la branche 502. Un sectionneur 67 du module 653 et un sectionneur 66 du module 654 sont connectés en parallèle, pour former un circuit de protection de la branche 504. Ce circuit de protection est connecté en série avec les accumulateurs 11 de la branche 504. Un sectionneur 67 du module 654 est connecté en série dans la branche 505.

Si un courant excessif traverse la branche 502 par exemple, le sectionneur 67 du module 651 et le sectionneur 66 du module 652 initient l'explosion de leurs éléments explosifs respectifs. L'ensemble des sectionneurs du module 651 et du module 652 sont alors ouverts. Aucun courant série ne peut alors circuler dans la branche 502. Aucun courant parallèle ne peut circuler non plus avec les branches 501 et 503.

Si un courant parallèle excessif traverse un sectionneur 6i1 du module 651, ce sectionneur initie l'explosion de l'élément explosif de son module. L'ensemble des sectionneurs de son module sont alors ouverts. Si le courant parallèle a pour origine un dysfonctionnement dans la branche 502, un courant parallèle excessif apparaît également à travers un sectionneur 6i2 du module 652. Ce sectionneur initie l'explosion de l'élément explosif de son module. L'ensemble des sectionneurs de son module sont alors ouverts. Aucun courant série ne peut alors circuler dans la branche 502. Aucun courant parallèle ne peut circuler non plus avec les branches 501 et 503. Les accumulateurs de la branche 501 ne sont pas soumis à des surtensions imposées par des liaisons avec les accumulateurs des autres branches. L'invention peut ainsi protéger des accumulateurs lithium dont l'électrochimie ne tolère pas les surtensions comme l'oxyde de Cobalt, le Nickel Cobalt Aluminium (NCA), le Nickel Manganèse Cobalt (NMC) et l'oxyde de Manganèse, par exemple.

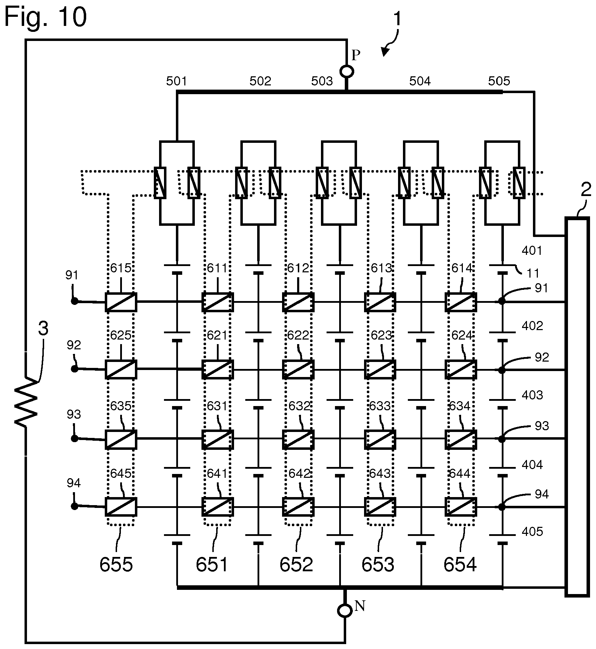

La figure 10 est un schéma électrique d'un exemple de batterie 1 selon une déclinaison de la figure 9. Cette déclinaison se différencie par la présence d'un module 655 à élément explosif continu 62 selon la figure 8. Des connexions en parallèle sont formées entre les branches 501 et 505 par l'intermédiaire des sectionneurs 615, 625, 635 et 645 du module 655. Les noeuds 91 à 94 illustrent les connexions des sectionneurs 615, 625, 635 et 645 à la branche 505

Par ailleurs, le sectionneur 67 du module 655 et le sectionneur 66 du module 651 sont connectés en parallèle, pour former un circuit de protection de la branche 501. Le sectionneur 66 du module 655 et le sectionneur 67 du module 654 sont connectés en parallèle, pour former un circuit de protection de la branche 505.

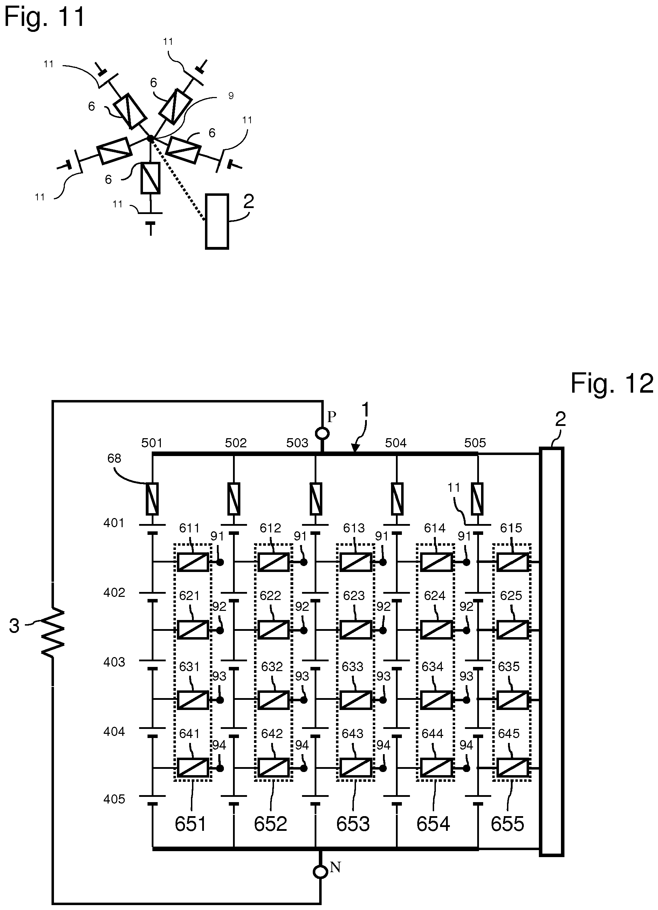

La figure 11 représente schématiquement une variante avantageuse de connexion d'accumulateurs 11 dans un étage, au moyen de sectionneurs 6. En l'occurrence, l'ensemble des accumulateurs 11 de l'étage ont une borne connectée à un noeud de connexion commun 9 par l'intermédiaire de sectionneurs 6 respectifs. L'autre borne de ces accumulateurs 11 peut être connectée à un autre noeud de connexion commun 9 par l'intermédiaire d'autres sectionneurs 6 respectifs.

La figure 12 est un schéma électrique d'un exemple de batterie 1 mettant en oeuvre des connexions d'accumulateurs avec des sectionneurs comme illustré à la figure 11. Les sectionneurs 611, 612, 613, 614 et 615 présentent chacune une borne connectée à un noeud de connexion commun 91. Le noeud de connexion commun 91 est connecté au circuit 2. Les accumulateurs de l'étage 401 sont connectés en parallèle par l'intermédiaire des sectionneurs 611, 612, 613, 614 et 615. Les accumulateurs de l'étage 402 sont connectés en parallèle par l'intermédiaire des sectionneurs 611, 612, 613, 614 et 615. Les sectionneurs 621, 622, 623, 624 et 625 présentent chacune une borne connectée à un noeud de connexion commun 92. Le noeud de connexion commun 92 est connecté au circuit 2. Les accumulateurs de l'étage 402 sont connectés en parallèle par l'intermédiaire des sectionneurs 621, 622, 623, 624 et 625. Les accumulateurs de l'étage 403 sont connectés en parallèle par l'intermédiaire des sectionneurs 621, 622, 623, 624 et 625. Les sectionneurs 631, 632, 633, 634 et 635 présentent chacune une borne connectée à un noeud de connexion commun 93. Le noeud de connexion commun 93 est connecté au circuit 2. Les accumulateurs de l'étage 403 sont connectés en parallèle par l'intermédiaire des sectionneurs 631, 632, 633, 634 et 635. Les accumulateurs de l'étage 404 sont connectés en parallèle par l'intermédiaire des sectionneurs 631, 632, 633, 634 et 635. Les sectionneurs 641, 642, 643, 644 et 645 présentent chacune une borne connectée à un noeud de connexion commun 94. Le noeud de connexion commun 94 est connecté au circuit 2. Les accumulateurs de l'étage 404 sont connectés en parallèle par l'intermédiaire des sectionneurs 641, 642, 643, 644 et 645. Les accumulateurs de l'étage 405 sont connectés en parallèle par l'intermédiaire des sectionneurs 641, 642, 643, 644 et 645. Les sectionneurs 611, 621, 631 et 641 sont inclus dans un même module 651 présentant un élément explosif s'étendant en continu entre ces sectionneurs. Les sectionneurs 612, 622, 632 et 642 sont inclus dans un même module 652 présentant un élément explosif s'étendant en continu entre ces sectionneurs. Les sectionneurs 613, 623, 633 et 643 sont inclus dans un même module 653 présentant un élément explosif s'étendant en continu entre ces sectionneurs. Les sectionneurs 614, 624, 634 et 644 sont inclus dans un même module 654 présentant un élément explosif s'étendant en continu entre ces sectionneurs. Les sectionneurs 615, 625, 635 et 645 sont inclus dans un même module 655 présentant un élément explosif s'étendant en continu entre ces sectionneurs. Chaque branche 501, 502, 503, 504 et 505 comporte par ailleurs un fusible 68 connecté en série avec ses accumulateurs 11. Le module 651, le module 652, le module 653, le module 654 et le module 655 sont associés respectivement aux branches 501, 502, 503, 504 et 505.

Dans une telle structure, il reste possible de procéder à un équilibrage de charge des branches non défaillantes même en présence d'une branche défaillante. Dans une telle structure, les courants d'équilibrage transitent uniquement par le sectionneur associé à l'accumulateur concerné. Il n'y a ainsi pas de sectionneur qui voit transiter du courant de charge ou d'équilibrage à destination de plusieurs accumulateurs 11, ce qui limite les pertes. Le circuit 2 est ici connecté aux noeuds de connexion communs 9 afin de pouvoir procéder à un équilibrage de charge des différents accumulateurs 11.

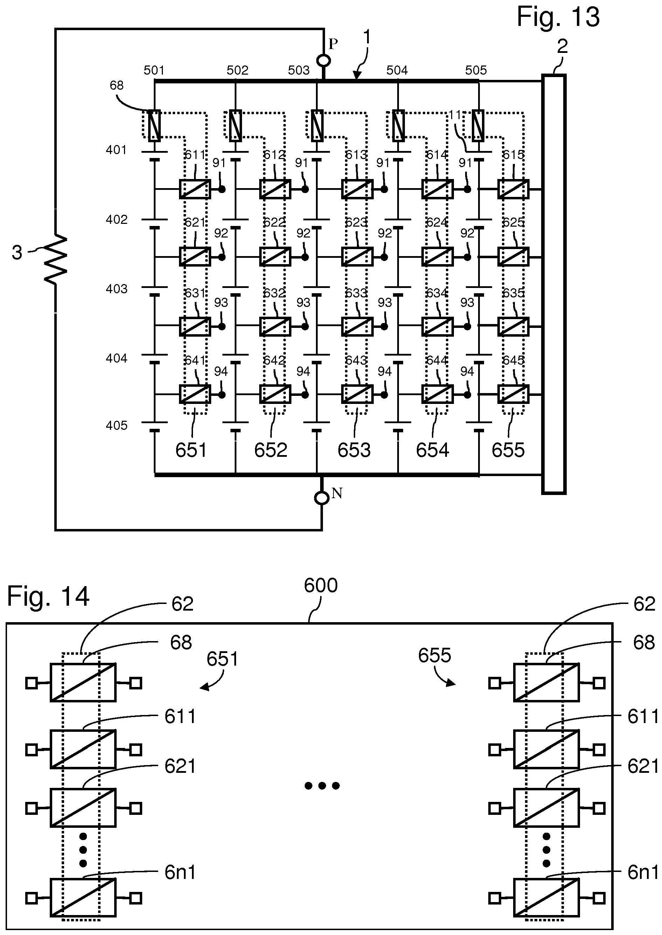

La figure 13 est un schéma électrique d'une variante de la batterie 1 illustrée à la figure 12. Dans cette variante, l'élément explosif de chacun des modules 651, 652, 653, 654 et 655 s'étend jusqu'en contact thermique avec le fusible 68 de sa branche. Ainsi, lors du déclenchement d'un élément explosif par un des sectionneurs de la branche ou par le fusible 68 de la branche, ce fusible 68 et ces sectionneurs sont ouverts. Aucun courant série ne peut alors circuler dans cette branche. Aucun courant parallèle ne peut circuler non plus avec les autres branches. Une telle structure est ainsi particulièrement adaptée lorsque les accumulateurs 11 ne sont pas conçus pour supporter une différence de potentiel entre leurs bornes supérieure à leur tension nominale.

Une autre structure peut faire appel à des modules présentant un élément explosif continu ayant un pont thermique avec plusieurs sectionneurs. On peut par exemple connecter une diode zener aux bornes d'un ou plusieurs accumulateurs d'une branche. La diode zener présente un pont thermique avec l'élément explosif. Lorsque la tension aux bornes de la diode zener est anormalement élevée, cette diode zener chauffe. Cet échauffement peut alors initier l'explosion de l'élément explosif et ainsi l'ouverture des sectionneurs avec lesquels elle comporte un pont thermique. D'autres types de diodes écréteuses qu'une diode zener peuvent être utilisées pour cette même fonction. Une telle diode écréteuse peut également être utilisée pour provoquer l'ouverture d'un fusible série de la branche. Afin de limiter les courants de fuite, une diode zener peut être connectée aux bornes de plusieurs accumulateurs 11 connectés en série dans une branche. Cette variante assure une protection de sécurité vis-à-vis de la surcharge accidentelle des accumulateurs en cas de défaillance de gestion électronique de la charge. Si la diode zener ne chauffe pas suffisamment, on peut disposer un composant électrique en série avec cette diode zener en formant un pont thermique entre ce composant et l'élément explosif continu. Ce composant électrique est alors dimensionné pour être chauffé suffisamment par le courant zener et alors déclencher l'élément explosif continu.

L'ensemble des fusibles des sectionneurs détaillés précédemment peut avantageusement être regroupé sur un même circuit intégré. La figure 14 illustre un circuit intégré 600. Ce circuit intégré 600 inclut les modules 651 à 655 de la figure 13. Les différents sectionneurs de ces modules comportent des plots de connexion par l'intermédiaire desquels ils sont connectés dans la batterie 1.

## Revendications

1. Batterie d'accumulateurs (1), comprenant au moins :
- des premier et deuxième étages (401, 402) connectés électriquement en série, chaque étage incluant au moins des premier à troisième accumulateurs (11) connectés électriquement en parallèle ;
- au moins des premier et deuxième sectionneurs (611,612) par l'intermédiaire desquels les premier à troisième accumulateurs (11) dudit premier étage (401) sont connectés en parallèle et par l'intermédiaire desquels les premier à troisième accumulateurs (11) dudit deuxième étage (402) sont connectés en parallèle, chacun desdits sectionneurs incluant des première et deuxième électrodes ;
- **caractérisée en ce que** chacun desdits sectionneurs inclut en outre :
- un fusible (61) comportant une liaison conductrice connectée en série entre les première et deuxième électrodes et comportant une partie fusible ;
- un explosif (62), un pont thermique étant formé entre le fusible et l'explosif de sorte que l'échauffement dudit fusible forme un détonateur initiant l'explosion de l'explosif, l'explosion de l'explosif provoquant l'ouverture de ladite liaison conductrice, l'explosif présentant une température d'initiation de l'explosion inférieure à la température de fusion de ladite partie fusible.

2. Batterie d'accumulateurs selon la revendication 1, dans laquelle lesdits accumulateurs (11) sont des accumulateurs électrochimiques supportant sans destruction une différence de potentiel entre leurs bornes au moins supérieure de 10 % à leur tension nominale.

3. Batterie d'accumulateurs selon la revendication 2, dans laquelle lesdits accumulateurs sont de type lithium-ion LiFePO₄.

4. Batterie d'accumulateurs selon l'une quelconque des revendications précédentes, comprenant un dispositif de détection (2) de l'ouverture d'une liaison conductrice, et dans laquelle chacun desdits sectionneurs comprend un élément conducteur (63) connecté en série entre deux bornes du dispositif de détection, l'élément conducteur étant disposé de façon à être rompu par l'explosion de l'explosif de son sectionneur.

5. Batterie d'accumulateurs selon l'une quelconque des revendications précédentes, dans laquelle la première électrode des premier et deuxième sectionneurs est connectée à un noeud de connexion commun (NC), dans laquelle la deuxième électrode du premier sectionneur est connectée au premier accumulateur du premier étage, et dans laquelle la deuxième électrode du deuxième sectionneur est connectée au deuxième accumulateur du premier étage.

6. Batterie d'accumulateurs selon la revendication 5, dans laquelle lesdits premiers accumulateurs sont connectés en série dans une première branche (501), dans laquelle les deuxièmes accumulateurs sont connectés en série dans une deuxième branche (502), dans laquelle lesdits troisièmes accumulateurs sont connectés en série dans une troisième branche (503), la batterie comprenant en outre des premier à troisième circuits de protection connectés en série dans les première à troisième branches respectivement, chacun desdits circuits de protection comprenant un fusible traversé par le courant série de la branche, des ponts thermiques étant formés respectivement :
- entre l'explosif du premier sectionneur et le fusible du quatrième circuit de protection ;
- entre l'explosif du deuxième sectionneur et le fusible du cinquième circuit de protection ;

7. Batterie d'accumulateurs selon l'une quelconque des revendications 1 à 4, comprenant en outre :
- un troisième étage (403) connecté électriquement en série avec les premier et deuxième étages (401,402), le troisième étage incluant au moins des premier à troisième accumulateurs (11) connectés électriquement en parallèle ;
- au moins des cinquième et sixième sectionneurs (621,622) par l'intermédiaire desquels les premier à troisième accumulateurs (11) dudit deuxième étage (402) sont connectés en parallèle et par l'intermédiaire desquels les premier à troisième accumulateurs (11) dudit troisième étage (403) sont connectés en parallèle, les cinquième et sixième sectionneurs incluant :
- des première et deuxième électrodes ;
- un fusible (61) comportant une liaison conductrice connectée en série entre les première et deuxième électrodes et comportant une partie fusible ;
- un explosif (62), un pont thermique étant formé entre le fusible et l'explosif de sorte que l'échauffement dudit fusible forme un détonateur initiant l'explosion de l'explosif, l'explosion de l'explosif provoquant l'ouverture de ladite liaison conductrice, l'explosif présentant une température d'initiation de l'explosion inférieure à la température de fusion de ladite partie fusible ;
dans laquelle l'explosif du premier sectionneur et l'explosif du cinquième sectionneur sont inclus dans un même premier élément explosif continu (65), et dans laquelle l'explosif du deuxième sectionneur et l'explosif du sixième sectionneur sont inclus dans un même deuxième élément explosif continu (65).

8. Batterie d'accumulateurs selon la revendication 7, dans laquelle lesdits premiers accumulateurs sont connectés en série dans une première branche (501), dans laquelle les deuxièmes accumulateurs sont connectés en série dans une deuxième branche (502), dans laquelle lesdits troisièmes accumulateurs sont connectés en série dans une troisième branche (503), des quatrième à sixième circuits de protection étant connectés en série dans les première à troisième branches respectivement, chacun desdits circuits de protection comprenant des premier et deuxième fusibles connectés en parallèle, des ponts thermiques étant formés respectivement :
- entre ledit premier élément explosif continu et le deuxième fusible du quatrième circuit de protection ;
- entre ledit premier élément explosif continu et le premier fusible du cinquième circuit de protection ;
- entre ledit deuxième élément explosif continu et le deuxième fusible du cinquième circuit de protection ;
- entre ledit deuxième élément explosif continu et le premier fusible du sixième circuit de protection.

## Patentansprüche

1. Akkumulatorenbatterie (1), welche wenigstens umfasst:
- eine erste und eine zweite Stufe (401, 402), die elektrisch in Reihe geschaltet sind, wobei jede Stufe wenigstens einen ersten bis dritten Akkumulator (11) aufweist, die elektrisch parallelgeschaltet sind;
- wenigstens einen ersten und einen zweiten Trennschalter (611, 612), über welche der erste bis dritte Akkumulator (11) der ersten Stufe (401) parallelgeschaltet sind und über welche der erste bis dritte Akkumulator (11) der zweiten Stufe (402) parallelgeschaltet sind, wobei jeder der Trennschalter eine erste und eine zweite Elektrode aufweist;
- **dadurch gekennzeichnet, dass** jeder der Trennschalter außerdem aufweist:
- eine Schmelzsicherung (61), die eine leitende Verbindung aufweist, die zwischen die erste und die zweite Elektrode in Reihe geschaltet ist und einen schmelzbaren Teil aufweist;
- einen Explosivstoff (62), wobei eine Wärmebrücke zwischen der Schmelzsicherung und dem Explosivstoff ausgebildet ist, derart, dass die Erwärmung der Schmelzsicherung einen Zünder bildet, der die Explosion des Explosivstoffs auslöst, wobei die Explosion des Explosivstoffs das Öffnen der leitenden Verbindung hervorruft, wobei der Explosivstoff eine Auslösetemperatur der Explosion aufweist, die niedriger als die Schmelztemperatur des schmelzbaren Teils ist.

2. Akkumulatorenbatterie nach Anspruch 1, wobei die Akkumulatoren (11) elektrochemische Akkumulatoren sind, die ohne Zerstörung einer Potentialdifferenz zwischen ihren Klemmen standhalten, die wenigstens um 10 % höher als ihre Nennspannung ist.

3. Akkumulatorenbatterie nach Anspruch 2, wobei die Akkumulatoren vom Typ LiFePO₄ Lithium-Ionen -Akkumulatoren sind.

4. Akkumulatorenbatterie nach einem der vorhergehenden Ansprüche, welche eine Vorrichtung zur Erkennung (2) des Öffnens einer leitenden Verbindung umfasst, und wobei jeder der Trennschalter ein leitendes Element (63) umfasst, das zwischen zwei Klemmen der Vorrichtung zur Erkennung in Reihe geschaltet ist, wobei das leitende Element derart angeordnet ist, dass es durch die Explosion des Explosivstoffs seines Trennschalters zerbrochen wird.

5. Akkumulatorenbatterie nach einem der vorhergehenden Ansprüche, wobei die erste Elektrode des ersten und des zweiten Trennschalters mit einem gemeinsamen Verbindungsknoten (NC) verbunden ist, wobei die zweite Elektrode des ersten Trennschalters mit dem ersten Akkumulator der ersten Stufe verbunden ist und wobei die zweite Elektrode des zweiten Trennschalters mit dem zweiten Akkumulator der ersten Stufe verbunden ist.

6. Akkumulatorenbatterie nach Anspruch 5, wobei die ersten Akkumulatoren in einem ersten Zweig (501) in Reihe geschaltet sind, wobei die zweiten Akkumulatoren in einem zweiten Zweig (502) in Reihe geschaltet sind, wobei die dritten Akkumulatoren in einem dritten Zweig (503) in Reihe geschaltet sind, wobei die Batterie außerdem eine erste bis dritte Schutzschaltung umfasst, die in dem ersten, zweiten bzw. dritten Zweig in Reihe geschaltet sind, wobei jede der Schutzschaltungen eine Schmelzsicherung umfasst, die von dem Reihen-Strom des Zweiges durchflossen wird, wobei jeweils eine Wärmebrücke ausgebildet ist:
- zwischen dem Explosivstoff des ersten Trennschalters und der Schmelzsicherung der vierten Schutzschaltung;
- zwischen dem Explosivstoff des zweiten Trennschalters und der Schmelzsicherung der fünften Schutzschaltung.

7. Akkumulatorenbatterie nach einem der Ansprüche 1 bis 4, welche außerdem umfasst:
- eine dritte Stufe (403), die mit der ersten und der zweiten Stufe (401, 402) elektrisch in Reihe geschaltet ist, wobei die dritte Stufe wenigstens einen ersten bis dritten Akkumulator (11) aufweist, die elektrisch parallelgeschaltet sind;
- wenigstens einen fünften und einen sechsten Trennschalter (621, 622), über welche der erste bis dritte Akkumulator (11) der zweiten Stufe (402) parallelgeschaltet sind und über welche der erste bis dritte Akkumulator (11) der dritten Stufe (403) parallelgeschaltet sind, wobei der fünfte und sechste Trennschalter aufweisen:
- eine erste und eine zweite Elektrode;
- eine Schmelzsicherung (61), die eine leitende Verbindung aufweist, die zwischen die erste und die zweite Elektrode in Reihe geschaltet ist und einen schmelzbaren Teil aufweist;
- einen Explosivstoff (62), wobei eine Wärmebrücke zwischen der Schmelzsicherung und dem Explosivstoff ausgebildet ist, derart, dass die Erwärmung der Schmelzsicherung einen Zünder bildet, der die Explosion des Explosivstoffs auslöst, wobei die Explosion des Explosivstoffs das Öffnen der leitenden Verbindung hervorruft, wobei der Explosivstoff eine Auslösetemperatur der Explosion aufweist, die niedriger als die Schmelztemperatur des schmelzbaren Teils ist;
wobei der Explosivstoff des ersten Trennschalters und der Explosivstoff des fünften Trennschalters in ein und demselben ersten durchgehenden explosiven Element (65) enthalten sind und wobei der Explosivstoff des zweiten Trennschalters und der Explosivstoff des sechsten Trennschalters in ein und demselben zweiten durchgehenden explosiven Element (65) enthalten sind.

8. Akkumulatorenbatterie nach Anspruch 7, wobei die ersten Akkumulatoren in einem ersten Zweig (501) in Reihe geschaltet sind, wobei die zweiten Akkumulatoren in einem zweiten Zweig (502) in Reihe geschaltet sind, wobei die dritten Akkumulatoren in einem dritten Zweig (503) in Reihe geschaltet sind, wobei eine vierte bis sechste Schutzschaltung in dem ersten, zweiten bzw. dritten Zweig in Reihe geschaltet sind, wobei jede der Schutzschaltungen eine erste und eine zweite Schmelzsicherung umfasst, die parallelgeschaltet sind, wobei jeweils eine Wärmebrücke ausgebildet ist:
- zwischen dem ersten durchgehenden explosiven Element und der zweiten Schmelzsicherung der vierten Schutzschaltung;
- zwischen dem ersten durchgehenden explosiven Element und der ersten Schmelzsicherung der fünften Schutzschaltung;
- zwischen dem zweiten durchgehenden explosiven Element und der zweiten Schmelzsicherung der fünften Schutzschaltung;
- zwischen dem zweiten durchgehenden explosiven Element und der ersten Schmelzsicherung der sechsten Schutzschaltung.

## Claims

1. Storage battery (1), including at least:
- first and second stages (401, 402) electrically connected in series, each stage including at least first, second and third accumulators (11) electrically connected in parallel;
- at least first and second disconnections (611, 612) by means of which the first, second and third accumulators (11) of said first stage (401) are connected in parallel and by means of which the first, second and third accumulators (11) of said second stage (402) are connected in parallel, each of said disconnectors including first and second electrodes;
- **characterized in that** each of said disconnectors further includes:
- a fuse (61) including a conducting link connected in series between the first and second electrodes and including a fusible portion;
- an explosive (62), with a heat bridge between the fuse and the explosive so that the heating of said fuse forms a detonator initiating the explosion of the explosive, the explosion of the explosive causing said conducting link to open, the explosive having an explosion initiation temperature that is lower than the melting point of said fusible portion.

2. Storage battery according to Claim 1, wherein said accumulators (11) are electrochemical accumulators withstanding without being destroyed a potential difference between their terminals at least 10% greater than their nominal voltage.

3. Storage battery according to Claim 2, wherein said accumulators are of LiFePO₄ lithium-ion type.

4. Storage battery according to any one of the preceding claims, including a device (2) for detecting the opening of a conducting link, and wherein each of said disconnectors includes a conducting element (63) connected in series between two terminals of the detection device, the conducting element being disposed so as to be broken by the explosion of the explosive of its disconnector.

5. Storage battery according to any one of the preceding claims, wherein the first electrode of the first and second disconnectors is connected to a common connection node (NC), wherein the second electrode of the first disconnector is connected to the first accumulator of the first stage, and wherein the second electrode of the second disconnector is connected to the second accumulator of the first stage.

6. Storage battery according to Claim 5, wherein first accumulators are connected in series in a first arm (501), wherein the second accumulators are connected in series in a second arm (502), wherein said third accumulators are connected in series in a third arm (503), the storage battery further including first, second and third protection circuits connected in series in the first, second and third arms, respectively, each of said protection circuits including a fuse through which the series current of the arm passes, respective heat bridges being formed between:
- the explosive of the first disconnector and the fuse of the fourth protection circuit;
- the explosive of the second disconnector and the fuse of the fifth protection circuit.

7. Storage battery according to any one of Claims 1 to 4, further including:
- a third stage (403) electrically connected in series with the first and second stages (401, 402), the third stage including first, second and third accumulators (11) electrically connected in parallel;
- at least fifth and sixth disconnectors (621, 622) by means of which the first, second and third accumulators (11) of said second stage (402) are connected in parallel and by means of which the first, second and third accumulators (11) of said third stage (403) are connected in parallel, the fifth and sixth disconnectors including:
- first and second electrodes;
- a fuse (61) including a conducting link connected in series between the first and second electrodes and including a fusible portion;
- an explosive (62), a heat bridge being formed between the fuse and the explosive so that the heating of said fuse forms a detonator initiating the explosion of the explosive, the explosion of the explosive causing said conducting link to open, the explosive having an explosion initiation temperature that is lower than the melting point of said fusible portion;
wherein the explosive of the first disconnector and the explosive of the fifth disconnector are included in the same first continuous explosive element (65), and wherein the explosive of the second disconnector and the explosive of the sixth disconnector are included in the same second continuous explosive element (65).

8. Storage battery according to Claim 7, wherein said first storage batteries are connected in series in a first arm (501), wherein the second accumulators are connected in series in a second arm(502), wherein the third accumulators are connected in series in a third arm (503), fourth, fifth and sixth protection circuits being connected in series in the first, second and third arms, respectively, each of said protection circuits including first and second fuses connected in parallel, respective heat bridges being formed between:
- said first continuous explosive element and the second fuse of the fourth protection circuit;
- said first continuous explosive element and the first fuse of the fifth protection circuit;
- said second continuous explosive element and the second fuse of the fifth protection circuit;
- said second continuous explosive element and the first fuse of the sixth protection circuit.
